# EUROPÄISCHE PATENTSCHRIFT

(11) **EP 4 180 777 B1**
(45) Veröffentlichungstag und Bekanntmachung des Hinweises auf die Patenterteilung: **04.12.2024**
(21) Anmeldenummer: 22206004.8
(22) Anmeldetag: 08.11.2022
(51) Int. Cl.: G01G 11/08, G01G 11/00

(54) **WÄGE- UND FÖRDEREINRICHTUNG UND VERFAHREN ZUR FÖRDERUNG UND MASSENDURCHSATZERFASSUNG VON SCHÜTTGUT**
WEIGHING AND CONVEYING DEVICE AND METHOD FOR CONVEYING AND MASS FLOW RATE DETECTION OF BULK MATERIAL
DISPOSITIF DE PESAGE ET DE TRANSPORT ET PROCÉDÉ DE TRANSPORT ET DE DÉTECTION DU DÉBIT MASSIQUE DE PRODUITS EN VRAC

(30) Priorität: 12.11.2021 DE 102021129497
(43) Veröffentlichungstag der Anmeldung: 17.05.2023
(73) Patentinhaber: CiTEX Holding GmbH, 49324 Melle (DE)
(72) Erfinder: Möller, Jörg, 32257 Bünde (DE)
(74) Vertreter: Bremer, Ulrich

(56) Entgegenhaltungen:
- DE-A1- 3 413 757
- US-A- 5 450 984

## Beschreibung

Die Erfindung betrifft eine Wäge- und Fördereinrichtung und ein Verfahren zur Förderung und Massendurchsatzerfassung von Schüttgut

Derartige Wäge- und Fördereinrichtungen dienen insbesondere dazu, rieselfähiges Schüttgut, z. B. Kunststoff-Granulat oder Kunststoff-Pellets, anzusaugen, den Massendurchsatz zu ermitteln und das Schüttgut kontinuierlich zu einem nachfolgenden Förderbereich einer Produktionsmaschine auszugeben. Der Förderbereich der Produktionsmaschine fördert das so aufgenommene Schüttgut kontinuierlich z. B. zu dem Extruder, der nachfolgend das Kunststoffprodukt extrudiert.

Hierbei ist zum einen eine kontinuierliche Ausgabe des Schüttguts zu dem Förderbereich zu gewährleisten, damit der Produktionsprozess nicht unterbrochen wird. Weiterhin ist der Massedurchsatz als Masse pro Zeit mit hinreichender Genauigkeit zu ermitteln, um die Produktionsparameter genau einzustellen.

Herkömmliche Wäge- und Fördereinrichtungen umfassen hierzu eine obere Saugförderanlage mit einem Materialabscheider, in dem über einen Unterdruckanschluss ein Vakuum ausgebildet wird, so dass dem Materialabscheider über einen Materialansauganschluss ein Luftstrom mit Schüttgut zugeführt wird. Das Schüttgut kann sich in dem Materialabscheider setzen und wird nach unten einem Vorratsbehälter zugeführt. Hierbei ist im Materialabscheider ein Füllstandssensor vorgesehen, der den Füllstand misst, so dass bei Erreichen eines Füllstands-Grenzwertes die Vakuumförderung beendet wird. Hierdurch bricht der Unterdruck im Materialabscheider zusammen, so dass sich eine durch den Unterdruck verschlossen gehaltene Auslaufklappe durch das Gewicht des auf ihr liegenden Schüttgutes öffnet. Das Schüttgut wird anschließend in den Vorratsbehälter und von dort über z. B. einen Spiralschlauch nach unten zu einer Wägeeinrichtung mit einem Wägebehälter ausgegeben. In der Wägeeinrichtung wird das Gewicht des Wägebehälters mit aufgenommenem Schüttgut kontinuierlich gemessen und somit der Massendurchsatz als Masse pro Zeit ermittelt.

Hierbei ergibt sich somit ein entsprechend hoher Aufbau durch die Saugförderanlage, den nachfolgenden Vorratsbehälter und die Wägeeinrichtung mit dem Wägebehälter. Bei einigen Produktionsanlagen ist der zur Verfügung stehende Bauraum jedoch begrenzt, so dass die Positionierung der Wäge- und Fördereinrichtung problematisch wird. Somit wird bei beengtem Bauraum gegebenenfalls eine kontinuierliche Gravimetrie nicht eingesetzt. Eine Positionierung der Wäge- und Fördereinrichtung mit größerem Abstand zu der Produktionsmaschine wird hingegen allgemein als problematisch angesehen, da bei Ausbildung längerer Förderbereiche zu der Produktionsmaschine die Messgenauigkeit verringert wird und es wieder zu Entmischungen des Materialmixes kommen kann.

US 5,450,984 A zeigt eine Material-Zuführvorrichtung, die das Laden, Zuführen und Wiederauffüllen in einem einzigen, vertikal angeordneten Gehäuse mit einem Zuführ-Trichterteil des Gehäuses unterhalb eines Wiederauffüll-Trichterteils kombiniert, wobei die Trichterteile durch eine Trennwand getrennt sind. Der Transport des Materials von dem Wiederauffüll-Trichterteil zu dem Zuführ-Trichterteil erfolgt durch ein Ventil, wobei das Material durch ein Unterdruckgefälle in den Wiederauffüll-Trichterteil angesaugt und in Abhängigkeit eines Material-Pegels in den Wiederauffüll-Trichterteil und den Zuführ-Trichterteil ausgegeben wird. Weiterhin ist ein Klappenventil zur Festlegung des Durchtritts des Materials von dem Wiederauffüll-Trichterteil zu dem Zuführ-Trichterteil vorgesehen, wobei mehrere derartige Systeme mit einer einzigen Unterdruckquelle betrieben werden können.

In DE 3413757A1 sind ein Verfahren und eine Vorrichtung zum Beschicken eines Behälters mit pulvrigen Gütern gezeigt. In einen Waagenbehälter mündet eine Anzahl von Förderrohren, durch die pulverförmige Güter aus Vorratssilos nacheinander in den Waagenbehälter gesaugt werden, in dem sie additiv verwogen und nach Öffnen eines Bodenverschlusses einer Mischeinrichtung zugeführt werden. Ein Absauggerät erzeugt das Vakuum in dem Behälter, wobei ein Belüftungsventil dieses Vakuum aufhebt.

Der Erfindung liegt die Aufgabe zugrunde, eine Wäge- und Fördereinrichtung und ein Verfahren zur Förderung und Massendurchsatzerfassung zu schaffen, die eine Saugförderung sowie eine genaue Verwiegung des Schüttguts ermöglichen.

Diese Aufgabe wird durch eine Wäge- und Fördereinrichtung und ein Verfahren nach den unabhängigen Ansprüchen gelöst. Die Unteransprüche beschreiben bevorzugte Weiterbildungen. Das erfindungsgemäße Verfahren kann insbesondere mit einer erfindungsgemäßen Wäge- und Fördereinrichtung durchgeführt werden.

Gemäß der Erfindung ist somit ein Wägebehälter, der ein Wägebehältervolumen einschließt, an seinem oberen Einlass und unteren Auslass verschließbar. Am oberen Ende des so verschließbaren Wägebehälters sind der Unterdruckanschluss und der Materialansauganschluss angeschlossen, In den Befüllzyklen wird bei verschlossenem Wägebehältervolumen der Luftstrom mit Schüttgut direkt dem Wägebehältervolumen zugeführt. Somit wird der Wägebehälter selbst auch als Aufnahmebehälter bzw. Auffangbehälter (oder "Abscheider") zur Aufnahme des geförderten Luftstroms mit dem Schüttgut eingesetzt.

Zur Einleitung eines Befüllzyklus wird der Wägebehälter an seinem oberen Einlass und unteren Auslass verschlossen. Dann wird in dem Befüllzyklus der Wägebehälter mit dem Schüttgut gefüllt, bis ein geeigneter Füllstand erreicht ist. Nachfolgend wird der Befüllzyklus beendet und der Wägezyklus eingeleitet. Zum Einleiten des Wägezyklus werden der untere Auslass und der obere Einlass geöffnet, so dass der Wägebehälter das aufgenommene Schüttgut nachfolgend kontinuierlich nach unten ausgeben kann, wo es - in grundsätzlich herkömmlicher Weise - über das Prallmittel, üblicherweise einen Prallkegel, zu einem Auffangtrichter und von diesem zu dem Förderbereich, z. B. direkt zu einer Extruderschnecke oder einer vorgeschalteten Förderschnecke, ausgegeben wird.

Erfindungsgemäß werden somit einige Vorteile erreicht:
So ist die Wäge- und Fördereinrichtung kleinbauend, insbesondere in vertikaler Richtung deutlich kleiner als herkömmliche Systeme, bei denen über der Wägeeinrichtung ein Vorratsbehälter und Saugfördersystem montiert sind. Die herkömmlicherweise im oberen Bereich ausgebildete Saugförderanlage mit Aufnahmebehälter bzw. Materialabscheidebehälter wird funktionell mit dem nachfolgenden Vorratsbehälter und Wägebehälter kombiniert bzw. integriert. Hierdurch wird ein Einsatz auch bei beengten Platzverhältnissen möglich, z. B. nahe an dem Extruder, so dass auch eine kurze Zuführung zu dem Extruder möglich ist, wodurch eine genaue Massendurchsatzermittlung gewährleistet wird.

Weiterhin wird ein schnellerer Materialwechsel ermöglicht, da lediglich der Wägebehälter mit nachfolgenden Auffangtrichter befüllt wird. Während herkömmlicherweise zunächst der befüllte Materialabscheidebehälter, Vorratsbehälter und Wägebehälter zu entleeren sind, kann erfindungsgemäß direkt der Wägebehälter mit Auffangtrichter entleert werden und z.B. ein anderes Material zugeführt werden. Hierdurch wird z.B. auch ein schneller Farbwechsel, d.h. eine Änderung des zugeführten Farbstoffes ermöglicht. Korrekturen z.B. in der Farbgebung sind somit schneller möglich. Somit wird eine hohe Flexibilität sowie in der Positionierung als auch in dem Materialdurchsatz ermöglicht.

Weiterhin ist der apparative Aufwand durch Entfall der zusätzlichen Stufen geringer.

Zum Verschließen des oberen Einlasses und des unteren Auslasses des Wägebehälters ist eine Stelleinrichtung vorgesehen. Die Stelleinrichtung kann grundsätzlich auch mehrteilig ausgebildet sein und mit einem Stellmittel den oberen Einlass und einem weiteren Stellmittel den unteren Auslass verschließen. Die Stelleinrichtung bewirkt zunächst eine Relativverstellung, wobei insbesondere jeweils ein Verschlussmittel oben und/oder unten verstellt werden kann, und/oder der Wägebehälter relativ zum dem Verschlussmittel nach unten und/oder oben verstellt werden kann. Somit kann z. B. auch der Wägebehälter nach unten verstellt werden um den unteren Auslass zu verstellen.

Gemäß einer bevorzugten Ausführungsform wird von unten ein Verschlussmittel gegen den unteren Auslass verstellt, und der Wägebehälter mit dem Verschlussmittel dann nach oben verstellt.

Gemäß einer vorteilhaften Weiterbildung wird das Prallmittel, z.B. ein Prallkegel, direkt vertikal gegen den unteren Auslass des Wägebehälters verstellt, so dass hier keine zusätzlichen Verschlussmittel einzusetzen sind. Somit kann insbesondere auch die Stelleinrichtung, die ohnehin für die Einstellung eines Auslaufspaltes zwischen dem unteren Auslass und dem Prallmittel und somit z. B. zur Justierung bei unterschiedlichen Materialformen und - größen, z. B. Granulat, Flakes usw. dient, auch für diese Verstellung eingesetzt werden.

Gemäß einer vorteilhaften Ausbildung wird der Wägebehälter direkt vertikal nach oben gegen eine Dichtung, insbesondere eine Dichtung an einer oberen Trägereinrichtung verstellt, wodurch sein oberer Einlass abdichtend verschlossen wird.

Gemäß einer besonders bevorzugten Ausbildung erfolgt eine gemeinsame Verstellung sowohl des Prallmittels gegen den unteren Auslass als auch des Wägebehälters nach oben gegen die obere Anlage an der Trägereinrichtung durch die Stelleinrichtung des Prallmittels. Hierbei kann insbesondere eine durchgängige Stellbewegung der Stelleinrichtung erfolgen, die zunächst das Prallmittel gegen den unteren Auslass verstellt und nachfolgend das Prallmittel mit Materialbehälter nach oben gegen die Trägereinrichtung drückt. Somit ist zur Verstellung in die Befüllposition nur die gemeinsame Stelleinrichtung, z. B. ein pneumatischer Stellzylinder, anzusteuern. Somit wird eine schnelle und sichere Verstellung mit geringem zusätzlichen Aufwand, insbesondere durch die ohnehin zur Einstellung des Auflaufspaltes eingesetzte Stelleinrichtung, ermöglicht.

Die Stelleinrichtung betätigt vorzugsweise eine Zugstange, die von oben durch die Trägereinrichtung, vertikal durch den Wägebehälter zu dem Prallmittel geführt ist und somit das Prallmittel erst gegen den unteren Auslass drückt und nachfolgend den Wägebehälter mitnimmt.

Als Messsignale wird zum einem eine Messkraft von Wägezellen aufgenommen, deren zeitliche Änderung - in an sich bekannter Weise - als Materialdurchsatz während des Wägezyklus ausgewertet werden kann. Hierzu können die an der Trägereinrichtung aufgenommenen Messzellen direkt den Materialbehälter wiegen. Weiterhin wird das Messsignal eines Füllstandsensors aufgenommen, der insbesondere an der Unterseite der Trägereinrichtung ausgebildet ist und somit von oben die Füllhöhe in dem Wägebehälter erfasst. Somit können beide Messeinrichtungen, die Wägezellen und der Füllstandssensor, direkt an der Trägereinrichtung, z. B. einer Trägerplatte aufgenommen werden, wobei auch die Stelleinrichtung an der Trägereinrichtung befestigt werden kann. Hierdurch wird eine einfache und gemeinsame Montage und Kontaktierung sowohl der Stelleinrichtung als auch der Messeinrichtungen ermöglicht, insbesondere ohne die räumliche Trennung bei herkömmlichen Anlagen. Die Trägereinrichtung ist in dem Wägezyklus räumlich von dem Wägebehälter weitgehend entkoppelt, so dass die Messsignale nicht gestört werden.

Der Füllstandssensor kann unterschiedlich ausgebildet sein:
so kann er als Abstandsmesser den Abstand des Schüttgutes zum Sensor messen, z. B. als optischer Abstandsmesser, z. B. auch Laser,
oder auf Basis von Radar, insbesondere Radar-Abstandsmesser, z. B. als direkte oder indirekte Laufzeitmessung,
und/oder als Ultraschall-Abstandsmesser.

Besonders bevorzugte Ausführungsformen des Füllstandssensors sind eine kapazitive und/oder induktive Ausbildung, insbesondere durch Ermittlung von Änderungen einer Kapazität in Abhängigkeit des Füllstandes, bzw. induktiv durch Messung einer Induktivität, die sich in Abhängigkeit vom Füllstand ändert. Durch einen kapazitiven oder induktiven Füllstandssensor kann insbesondere auch von oben das unterhalb liegende Schüttgut auch bei der Verwirbelung im Luftstrom gut erfasst werden kann, wobei diese Sensoren weiterhin kostengünstig ausgebildet werden können und durch das Füllgut nicht so leicht verschmutzen. Derartige kapazitive oder induktive Sensoren können erfindungsgemäß bevorzugt an der oberen Trägerplatte angebracht und nach unten ausgerichtet werden, was bei den einleitend genannten Systemen des Standes der Technik mit seitlich vorgesehenen Sensoren so nicht möglich ist.

Die Ansteuerung und Aufnahme der Messsignale sowie die Einleitung der Zyklen erfolgt durch eine Steuereinrichtung, die in dem Befüllzklus den Messwert der Füllhöhe aufnimmt und bei Erreichen eines Grenzwerts der Füllhöhe den Befüllzyklus beendet, indem sie ein Vakuumventil schließt und die Stelleinrichtung ansteuert, um den Wägebehälter oben und unten zu öffnen, wodurch der Wägezyklus eingeleitet wird.

In dem Wägezyklus wird das Messkraft-Signal aufgenommen und ausgewertet. Wenn das Messkraft-Signal einen unteren Mindestwert erreicht, wird eine Entleerung des Wägebehälters erkannt und der Wägezyklus beendet, indem der Wägebehälter verschlossen wird. Durch nachfolgendes Öffnen des Vakuumventils beginnt der nächste Befüllzyklus.

Gemäß einer vorteilhaften Ausbildung ist die Wäge- und Fördereinrichtung derartig ausgebildet, dass in der Befüllposition das in dem Wägebehälter ausgebildete Wägebehältervolumen lediglich durch den Unterdruckanschluss und den Materialansauganschluss mit Außenräumen verbunden ist.

Gemäß einer vorteilhaften Ausbildung ist die Wäge- und Fördereinrichtung derartig ausgebildet, dass der Wägebehälter in oberen Führungen spannungsfrei vertikal verstellbar ist, insbesondere in Führungen im Bereich von Aufnahmestücken von Wägezellen.

Gemäß einer vorteilhaften Ausbildung ist die Wäge- und Fördereinrichtung derartig ausgebildet, dass der Wägebehälter eine oder mehrere Wägezellen an der Trägereinrichtung vorgesehen sind und über Aufnahmestücke den Wägebehälter aufnehmen.

Gemäß einer vorteilhaften Ausbildung ist die Wäge- und Fördereinrichtung derartig ausgebildet, dass der Wägebehälter sich von seinem oberen Einlass zu seinem unteren Auslass zumindest bereichsweise verjüngt.

Gemäß einer vorteilhaften Ausbildung ist die Wäge- und Fördereinrichtung derartig ausgebildet, dass der Wägebehälter n einem mittleren Bereich sich nach unten konisch verjüngend und unterhalb des konischen Bereichs zylindrisch ausgebildet ist, wobei er in seinem unteren zylindrischen Bereich in dem Auffangtrichter geführt ist.

Die Erfindung wird im Folgenden anhand der beiliegenden Zeichnungen an einer Ausführungsform erläutert. Es zeigen:
- Fig. 1: eine Wäge- und Fördereinrichtung gemäß einer Ausführungsform der Erfindung in einem Wägezyklus;
- Fig. 2: die Wäge- und Fördereinrichtung aus Figur 1 im Schnitt A-A;
- Fig. 3: die Wäge- und Fördereinrichtung aus Figur 1, 2 in einem Befüllzyklus;
- Fig. 4: die Wäge- und Fördereinrichtung aus Figur 3 im Schnitt B-B;
- Fig. 5: ein zeitliches Diagramm der aufeinanderfolgenden Zyklen,
- Fig. 6: eine Wäge- und Fördereinrichtung gemäß dem Stand der Technik.

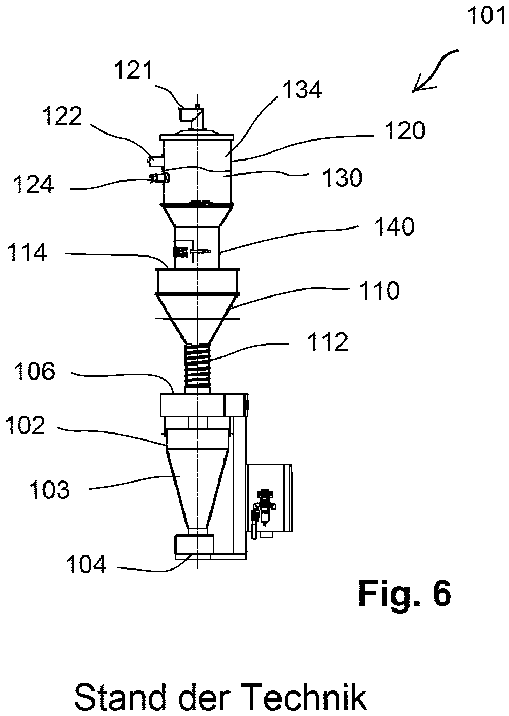

Figur 6 zeigt eine Wäge- und Fördereinrichtung 101 gemäß dem Stand der Technik, die zur Erfassung eines Massedurchsatzes eines rieselfähigen Schüttgutes 130 vorgesehen ist. Die Wäge- und Fördereinrichtung 101 weist unten eine Waage 102 mit einem Wägebehälter 103 auf, der sich von seinem oberen Einlass 106 zu seinem unteren Auslass 104 konisch verjüngt.

Oberhalb der Waage 102 ist ein Vorratsbehälter 110 vorgesehen, an dessen unterem Ende ein flexibler Schlauch, z.B. Spiralschlauch 112 zu dem Einlass 106 der Waage 102 geführt ist. Einem oberen Einlass 114 des Vorratsbehälters 110 wird das rieselfähige Schüttgut von einer Saugförderanlage 120 zugeführt, die wiederum einen Auffangbehälter 134 mit einem Unterdruckanschluss 121 zum Anschluss an einen Vakuumerzeuger, einen Materialansauganschluss 122 und einen Füllstandssensor 124 aufweist.

In der Saugförderanlage 120 wird über den Unterdruckanschluss 121 ein Vakuum erzeugt, durch das über den Materialansauganschluss 122 ein Luftstrom mit dem Schüttgut aus einem Vorratsbehälter angesaugt wird. Das Schüttgut 130 wird in den oberhalb des Vorratsbehälters 110 ausgebildeten Materialabscheider aufgenommen, setzt sich im Auffangbehälter 134 ab, und setzt sich am unteren Ende der Saugförderanlage 120 im dafür vorgesehenen Endbereich 140 ab, von wo das Schüttgut 130 dann in den Vorratsbehälter 110 fällt. In Befüllzyklen öffnet sich ein Absperrelement, das unterhalb des Spiralschlauchs 112, d.h. im Einlauf der Waage vorgesehen ist, so dass das Schüttgut aus dem Vorratsbehälter und dem Spiralschlauch in den Wägebehälter 103 fällt. Der Wägebehälter 103 gibt das Schüttgut 130 kontinuierlich nach unten über seinen unteren Auslass 104 aus, wo das Material durch einen Prallkegel gemischt oder verteilt wird und z. B. nachfolgend in einen Auffangtrichter gelangt, von dem aus es dann von einer Förderschnecke oder direkt einem Extruder mitgenommen wird.

Die Wäge- und Fördereinrichtung 101 gemäß dem Stand der Technik weist somit einen entsprechend hohen Aufbau mit einer entsprechenden Teileanzahl auf.

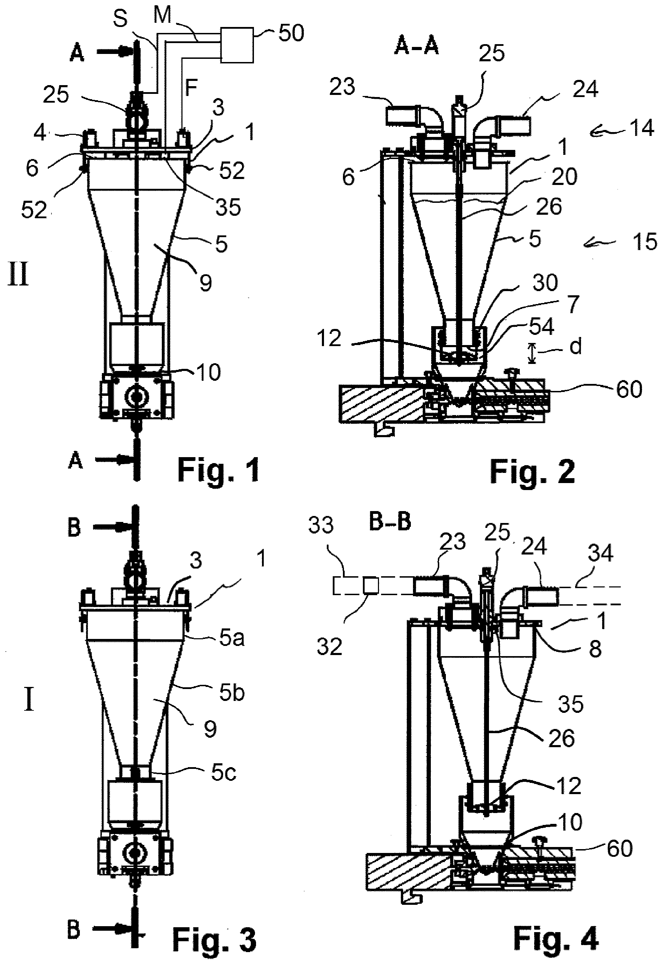

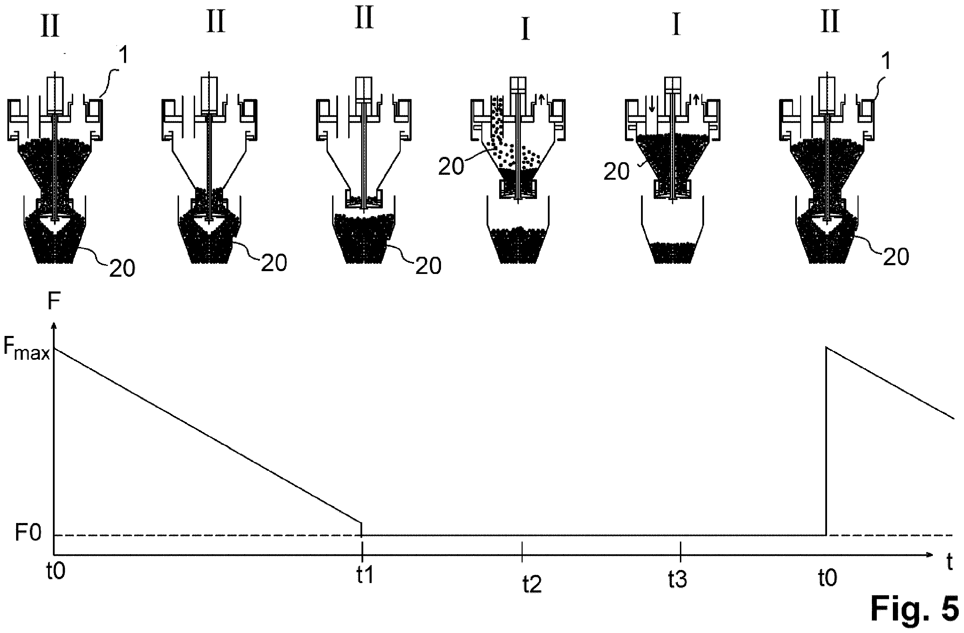

Die Figuren 1 bis 4 sowie das Messdiagramm der Fig. 5 zeigen eine Ausführungsform der Erfindung. Eine Wäge- und Fördereinrichtung 1 weist eine Trägerplatte 3 mit Wägezellen 4 sowie einen unterhalb der Trägerplatte 3 vorgesehenen Wägebehälter 5 auf. Der Wägebehälter 5 weist einen oberen Einlass 6 auf und verjüngt sich in seinem mittleren Bereich 5b konisch nach unten zu seinem unteren zylindrischen Bereich 5c mit seinem unteren Auslass 7. Im Bereich des unteren Auslass 7 ist an dem Wägebehälter 5 ein Prallkegel 12 zum Verteilen bzw. Mischen des herabfallenden Schüttguts 20 vorgesehen; unterhalb des unteren Auslass 7 ist ein Auffangtrichter10 vorgesehen.

An der Trägerplatte 3 sind ein Unterdruckanschluss 23 zum Anschluss an eine Unterdruckleitung 33 und ein Materialansauganschluss 24 zum Anschluss einer Materialansaugleitung 34 vorgesehen. Weiterhin ist an der Trägerplatte 3 ein Pneumatikzylinder 25 angebracht, der eine Zugstange 26 vertikal verstellt. Die Zugstange 26 erstreckt sich nach unten durch den Wägebehälter 5 und nimmt den vertikal verstellbaren Prallkegel 12 auf, der nach oben gegen den unteren Auslass 7 des Wägebehälters 5 verstellbar ist. Der Wägebehälter 5 ist wiederum vertikal verstellbar geführt, z.B. durch eine Führung durch obere Laschen, die im Bereich der Aufnahmestücke 52 vorgesehen sind. Weiterhin kann ein Gleitlager zur Führung des Prallkegels 12 beim Öffnen oder Verschließen vorgesehen sein.
Figur 3 und 4 zeigen die Wäge- und Fördereinrichtung 1 in dem Befüllzyklus I des Wägebehälters 5. Der Befüllzyklus I wird in Fig. 5 zum Zeitpunkt t2 eingeleitet. Zur Einleitung des Befüllzyklus I steuert eine in Fig. 1 gezeigte Steuereinrichtung 50 den Pneumatikzylinder 25 an, sodass er die Zugstange 26 mit dem am unteren Ende der Zugstange 26 vorgesehenen Prallkegel 12 nach oben zieht. Der Prallkegel 12 gelangt somit gegen den unteren Auslass 7 des Wägebehälters 5 und verschließt diesen. Nachfolgend wird der Wägebehälter 5 mit nach oben gezogen und mit seinem oberen Rand bzw. oberen Einlass 6 gegen eine Dichtung 8 an der Unterseite der Trägeplatte 3 gedrückt. Somit wird das Wägebehältervolumen 9 des Wägebehälter 5 durch die Trägerplatte 3 und den Prallkegel 12 verschlossen und ist nur noch über den Unterdruckanschluss 23 und den Materialansauganschluss 24 mit dem Außenraum verbunden.

Anschließend steuert die Steuereinrichtung 50 ein in der Unterdruckleitung 33 vorgesehenes Vakuumventil 32 an und gibt einen für die Saugförderung erforderlichen Unterdruck an den Unterdruckanschluss 23 und somit in das Wägebehältervolumen 9, sodass über den Materialansauganschluss 24 und die Materialansaugleitung 34 ein Schüttgut-Luftstrom aus einem Materialvorrat angesaugt wird und in das Wägebehältervolumen 9 gelangt, wo sich das Schüttgut 20 ablegt.

In dem Befüllzyklus I wird die Füllhöhe des Schüttguts 20 in dem Wägebehälter 5 über einen an der Trägerplatte 3 vorgesehenen Füllstandsensor 35 erfasst. Der Füllstandsensor 35 kann die Füllhöhe, d.h. den oberen Rand des aufgenommenen Schüttgut 20, mit unterschiedlichen Messprinzipien erfassen, z.B. optisch, Radarfüllstandssensoren, durch Ultraschall, sowie insbesondere kapazitiv oder induktiv. Die Steuereinrichtung 50 nimmt das Messsignal M des Füllstandsensors 35 auf und vergleicht den so ermittelten Füllstand mit einem maximalen Füllstand M-max. Zum Zeitpunkt t3 der Fig. 5 erreicht der Füllstand F den maximalen Füllstand M-max, woraufhin die Steuereinrichtung 50 den Befüllzyklus I beendet und den Wägezyklus II einleitet, indem sie zunächst das Vakuumventil 32 schließt und hierdurch die Unterdruckförderung beendet. Nachfolgend steuert die Steuereinrichtung 50 den Pneumatikzylinder 25 derartig an, dass die Zugstange 26 mit Prallkegel 12 und Wägebehälter 5 nach unten zurück in ihre in Figur 1, 2 gezeigte Ausgangsposition zurückverfahren werden. Damit der Prallkegel 12 und der Wägebehälter 5 spannungsfrei ihre korrekte Endlage erreichen, sind diese vorteilhafterweise in Vertikalrichtung mit Stiften und Langlöchern geführt. Somit wird zum Zeitpunkt t1 der Wägezyklus II eingestellt.

Der Wägebehälter 5 hängt in Aufnahmestücken 52 der Wägezellen 4, die während des Wägezyklus II das Gewicht des Wägebehälters 5 mit dem Schüttgut 20 messen und ein Messkraftsignal F an die Steuereinrichtung 50 ausgeben. Zwischen dem unteren Auslass 7 des Wägebehälters 5 und dem Prallkegel 12 ist ein definierter, umlaufender Auslassspalt 54 ausgebildet. Die Höhe des Auslassspaltes 54 bzw. der Auslass-Abstand d wird vorzugsweise vor dem Fördervorgang in Abhängigkeit des Schüttgutes eingestellt, z. B. in Abhängigkeit des Durchmessers der Partikel des Schüttgutes wie z. B. Flakes, Granulat, Körner usw.

Das im Wägebehälter 5 aufgenommene Schüttgut 20 fällt in dem Wägezyklus II nach unten durch den unteren Auslass 7 gegen den Prallkegel 12, wodurch der das Schüttgut 20 gemischt wird. Das Schüttgut 20 gelangt nachfolgend in den Auffangtrichter 10 und weiter nach unten zu einem Förderbereich 60, wobei dieser Förderbereich 60 durch eine zusätzliche Förderschnecke, oder direkt durch die Schnecke des Extruders gebildet sein kann, so dass das hier aufgenommene Schüttgut 20 kontinuierlich verarbeitet werden kann. Die Wägezellen 4 messen fortlaufend das Gewicht und können somit die Gewichtsabnahme bzw. den Materialstrom als Masse pro Zeit erfassen.

In der in Figur 1, 2 gezeigten Position für den Wägezyklus II ist der Pneumatikzylinder 25 über die Zugstange 26 nicht belastet; der Wägebehälter 5 mit dem Prallkegel 12 hängt nur in den Aufnahmestücken 52 der Wägezellen 4. Somit erfolgt keine Beeinflussung des Messergebnisses durch den Pneumatikzylinder 25 und die Zugstange 26. Da während des Befüllzyklus I der untere Auslass 7 des Wägebehälters 5 verschlossen ist und kein Material austreten kann, ist zur Überbrückung der für die Befüllung vorgesehene Befüllzyklus I benötigten Zeit ein ausreichend dimensionierter Auffangtrichter 10 vorgesehen. Dieser puffert somit genug Material bzw. Schüttgut 20, um in Fig. 5 zu den Zeitpunkten t2 und t3 eine unterbrechungsfreie Versorgung zu gewährleisten. Somit wird eine kontinuierliche Zuführung des Schüttguts 20 zu dem Förderbereich 60 und somit eine unterbrechungsfreie Versorgung des Extruders bzw. der Verarbeitungsmaschine gewährleistet.

In dem Diagramm der Figur 5 ist die von den Wägezellen 4 gemessene Messkraft F in Abhängigkeit der Zeit t gezeigt. Bei Einleitung des Wägezyklus II zu dem Zeitpunkt t0 wird eine maximale Messkraft Fmax gemessen. Nachfolgend fällt das Schüttgut 20 durch den Auslaufspalt 54 nach unten aus dem Wägebehälter 5 in den Auffangtrichter 10, so dass die Messkraft F bis zu dem Zeitpunkt t1 abfällt. Die Steuereinrichtung 50 erkennt, dass die Messkraft F ein Leergewicht F0 bzw. Minimalgewicht erreicht, wodurch das Ende des Wägezyklus II ermittelt wird. Anschließend leitet die Steuereinrichtung 50 wiederum den nächsten Befüllzyklus I ein, in dem nicht die Messkraft F relevant ist, sondern die Füllhöhe gemessen wird, um den Befüllzyklus nachfolgend zu beenden.

### Bezugszeichenliste

- 1: Wäge- und Fördereinrichtung
- 3: Trägerplatte
- 4: Wägezellen
- 5: Wägebehälter
- 5b: mittlerer konischer Bereich des Wägebehälters 5
- 5c: unterer zylindrischer Bereich mit dem unteren Auslass 7
- 6: oberer Einlass des Wägebehälters 5
- 7: unterer Auslass des Wägebehälters 5
- 8: Dichtung an der Unterseite der Trägerplatte 3
- 9: Wägebehältervolumen
- 10: Auffangtrichter
- 12: Prallkegel
- 14: Saugförderanlage
- 15: Wägebereich
- 20: Schüttgut
- 23: Unterdruckanschluss
- 24: Materialansauganschluss
- 25: Pneumatikzylinder, Stelleinrichtung
- 26: Zugstange
- 30: Gleitlager
- 32: Vakuumventil
- 33: Unterdruckleitung
- 34: Materialansaugleitung
- 35: Füllstandsensor
- 50: Steuereinrichtung
- 52: Aufnahmestück der Wägezellen 4 am Wägebehälter 5
- 54: Auslaufspalt
- 60: Förderbereich, z.B. Förderschnecke oder Extruder
- F: Messkraftsignal, Wägesignal
- Fmax: Maximalgewicht
- F0: Leergewicht
- M: Füllstand
- Mmax: Maximalfüllstand

- DM: Massedurchsatz
- d: Auslassabstand
- t: Zeit

- 101: Wäge- und Fördereinrichtung
- 102: Waage
- 103: Wägebehälter
- 104: Auslass der Waage 102
- 106: Einlass der Waage 102
- 112: Spiralschlauch
- 110: Vorratsbehälter
- 114: Einlass des Vorratsbehälters 110
- 140: Endbereich
- 120: Saugförderanlage
- 121: Unterdruckanschluss
- 122: Materialsauganschluss
- 124: Füllstandssensor
- 130: Schüttgut
- 134: Aufnahmebehälter, Materialabscheider

## Patentansprüche

1. Wäge- und Fördereinrichtung (1) zur Massendurchsatzerfassung und Ausgabe von Schüttgut (20), die aufweist:
- einen Wägebehälter (5) mit einem oberen Einlass (6) zur Aufnahme des Schüttguts (20) und einem unteren Auslass (7) zur Ausgabe des Schüttguts (20),
- mindestens eine Wägezelle (4) zum Messen des Gewichtes zumindest des Wägebehälters (5) mit aufgenommenem Schüttgut (20) und Ausgabe eines Messkraftsignals (F),
- einen Saugförderbereich (14) mit einem Unterdruckanschluss (23) zum Anschluss an eine Unterdruckleitung (33) und einem Materialansauganschluss (24) zum Anschluss einer Ansaugleitung für einen Luftstrom mit aufgenommenem Schüttgut (20),
- einen Füllstandssensor (35) zum Messen eines Füllstandes des Schüttgutes (20) in dem Wägebehälter (5) und Ausgabe eines Füllstandssignals (M),
**gekennzeichnet durch**
- mindestens eine Stelleinrichtung (25) zum Verschließen des oberen Einlass (6) und des unteren Auslass (7),
- eine Steuereinrichtung (50), die ausgebildet ist, das Messkraftsignal (F) und das Füllstandsignal (M) aufzunehmen und die mindestens eine Stelleinrichtung (25) anzusteuern zur Verstellung zwischen einer Befüll-Position (II) mit verschlossenem oberen Einlass (6) und verschlossenem unteren Auslass (7) des Wägebehälters (5) und einer Wäge-Position mit offenem oberen Einlass (6) und offenem unteren Auslass (7) des Wägebehälters (5).

2. Wäge- und Fördereinrichtung (1) nach Anspruch 1, **dadurch gekennzeichnet, dass**
ein Prallmittel (12) unterhalb des unteren Auslass (7) zum Verteilen oder Vermischen des Schüttgutes (20) vorgesehen ist, insbesondere ein Prallkegel (12),
wobei das Prallmittel (12) durch die Stelleinrichtung (25) verstellbar ist zwischen
seiner unteren Stellung in der Wäge-Position für einen Wägezyklus (I), in der ein Auslaufspalt (54) zwischen dem unteren Auslass (7) und dem Prallmittel (12) gebildet ist, und
seiner oberen Stellung in der Befüll- Position für einen Befüll-Zyklus (II), in der das Prallmittel (12), den unteren Auslass (7) verschließt, insbesondere luftdicht verschließt.

3. Wäge- und Fördereinrichtung (1) nach Anspruch 2 , **dadurch gekennzeichnet, dass**
der Wägebehälter (5) vertikal verstellbar ist zwischen
seiner unteren Wägeposition, in der er von einer Trägereinrichtung (3) beabstandet ist, und
seiner oberen Befüllposition, in der seine obere Aufnahme (6) und/oder sein oberer Rand an der Trägereinrichtung (3) dichtend anliegt,
wobei die gemeinsame Stelleinrichtung (25) ausgebildet und ansteuerbar ist zur Verstellung
- des Prallmittels (12) gegen den unteren Auslass (7) in einer ersten Teilbewegung und
- nachfolgend des Prallmittels (12) mit Wägebehälter (5) nach oben gegen die Trägereinrichtung (3) in einer nachfolgenden zweiten Teilbewegung der Stelleinrichtung (25, 26),
wobei in der Befüllposition das Prallmittel (12) den unteren Auslass (7) und die Trägereinrichtung (3) den oberen Einlass (6) des Wägebehälters (5) abdichtend verschließt.

4. Wäge- und Fördereinrichtung (1) nach Anspruch 2 oder 3, **dadurch gekennzeichnet, dass** die Stelleinrichtung (25), z. B. ein pneumatischer Stellzylinder (25), über eine sich vertikal nach unten durch den Wägebehälter (5) erstreckende Zugstange (26) mit dem Prallmittel (12) verbunden ist und das Prallmittel (12) über die Zugstange (26) vertikal nach oben verstellbar ist.

5. Wäge- und Fördereinrichtung (1) nach einem der vorherigen Ansprüche, **dadurch gekennzeichnet, dass**
sie einen Auffangtrichter (10) aufweist, der zumindest teilweise unterhalb des unteren Auslass (7) vorgesehen ist und weiterhin ausgebildet ist, aus dem unteren Auslass (7) ausfallendes Schüttgut (20) aufzunehmen und zu seinem unteren Ausgabeauslass weiterzuleiten.

6. Wäge- und Fördereinrichtung (1) nach einem der vorherigen Ansprüche, **dadurch gekennzeichnet, dass** die Steuereinrichtung (50) eingerichtet und ausgebildet ist, in Abhängigkeit zumindest des Messsignals (M) des Füllstandssensors (35) und des Messkraftsignals (F)
- (I) zur Einleitung eines Befüllzyklus (I) Steuersignale auszugeben an
= die mindestens eine Stelleinrichtung (25) zum Verschließen des unteren Auslass (7) und des oberen Einlass (6) des Wägebehälters (5), unter Ausbildung eines geschlossenen Wägebehältervolumens (9) zur Befüllung über den Materialansauganschluss (24),
= und nachfolgend an ein Vakuumventil (32) zum Öffnen einer an dem Unterdruckanschluss (23) vorgesehenen Unterdruckleitung (33),
- (II) und zur Einleitung eines Wägezyklus (II) Steuersignale (S) auszugeben an
= das Vakuumventil (32) zum Schließen der Unterdruckleitung (33),
= und nachfolgend die mindestens eine Stelleinrichtung (25, 26) zum Öffnen des Wägebehälters (5) an seinem unteren Auslass (7) und seinem oberen Einlass (6).

7. Wäge- und Fördereinrichtung (1) nach einem der vorherigen Ansprüche **dadurch gekennzeichnet, dass** die Steuereinrichtung (50) weiterhin eigerichtet und ausgebildet ist, in Abhängigkeit eines aus dem Messkraft-signal (F) ermittelten Massedurchsatzes und durch Ansteuerung der Stelleinrichtung (25) den Auslaufspalt (54) einzustellen, zur Regelung des Massedurchsatzes.

8. Wäge- und Fördereinrichtung (1) nach einem der vorherigen Ansprüche, **dadurch gekennzeichnet, dass** der Materialansauganschluss (24) sich durch die Trägereinrichtung (3) und zumindest teilweise in den Wägebehälter (5) erstreckt, zur direkten Befüllung des Wägebehälters (5) ohne vorgeschalteten Aufnahmebehälter.

9. Wäge- und Fördereinrichtung (1) nach einem der vorherigen Ansprüche, **dadurch gekennzeichnet, dass** die Trägereinrichtung eine Trägerplatte (3) aufweist, an der ein oder mehrere der folgenden Elemente vorgesehen sind:
der Füllstandssensor (35), mindestens eine Wägezelle (4), der Unterdruckanschluss (23), der Materialansauganschluss (24), die Stelleinrichtung (25), eine Dichtung (8) zum Abdichten des oberen Einlass (6) des Wägebehälters (5).

10. Wäge- und Fördereinrichtung (1) nach einem der vorherigen Ansprüche, **dadurch gekennzeichnet, dass** der Füllstandssensor (35) ausgebildet ist nach einer oder mehreren der folgenden Ausbildungen:
- kapazitiv, insbesondere durch Ermittlung von Änderungen einer Kapazität in Abhängigkeit des Füllstandes,
- induktiv, insbesondere durch Messung einer Induktivität, die sich in Abhängigkeit vom Füllstand ändert,
- als optischer Abstandsmesser, z. B. auch Laser,
- als Radar, insbesondere Radar-Abstandsmesser, z. B. als direkte oder indirekte Laufzeitmessung,
- als Ultraschall-Abstandsmesser.

11. Anlage aus einer Wäge- und Fördereinrichtung (1) nach einem der vorherigen Ansprüche, einer Unterdruckleitung (33) mit Vakuumventil (32), einer Materialzuführleitung (24), die in einen Materialbehälter mit dem Schüttgut (20) geführt ist, einem Förderbereich (60) unter der Wäge- und Fördereinrichtung (1) und einer Produktionsmaschine.

12. Verfahren zur Förderung und Massendurchsatzerfassung von Schüttgut (20), bei dem
in alternierenden Befüllzyklen (I) und Wägezyklen (II) Schüttgut (20) in einer Wäge- und Fördereinrichtung (1) mit einem Wägebehälter (5) aufgenommen, erfasst und zu einem Förderbereich (60) einer Produktionsmaschine ausgegeben wird,
- wobei in dem Befüllzyklus (I)
in einem Wägebehältervolumen (9) des Wägebehälters (5) ein Unterdruck ausgebildet wird,
über einen an das Wägebehältervolumen (9) angeschlossenen Materialansauganschluss (24) ein Luftstrom mit Schüttgut (20) angesaugt wird, so dass sich das Schüttgut (20) in dem Wägebehältervolumen (9) ablegt, ein Füllstand des Schüttguts (20) gemessen wird, und
bei Ermittlung eines maximalen Füllstandes der Befüllzyklus (I) beendet wird, und
- wobei in dem Wägezyklus (II)
das Schüttgut (20) kontinuierlich aus dem Wägebehältervolumen (9) nach unten über ein Prallmittel (12) zu dem Förderbereich (60) der Produktionsmaschine gelangt,
- wobei zur Verstellung in eine Befüllposition und zur Einleitung des Befüllzyklus (I) der untere Auslass (7) und der obere Einlass (6) des Wägebehälters (5) verschlossen werden und nachfolgend ein Vakuum an den Unterdruckanschluss (23) angelegt wird,
- wobei zur Verstellung in eine Wägeposition und zur Einleitung des Wägezyklus (II) die Vakuumzuführung an den Unterdruckanschluss (23) beendet wird und nachfolgend der untere Auslass (7) und der obere Einlass (6) des Wägebehälters (5) geöffnet werden.

13. Verfahren nach Anspruch 12, **dadurch gekennzeichnet, dass**
- bei der Verstellung in die Befüllposition
- der untere Auslass (7) geschlossen wird durch vertikales Verstellen des Prallmittels (12) nach oben gegen den unteren Auslass (7), und/oder
der obere Einlass (6) verschlossen wird durch vertikales Verstellen des Wägebehälters (5) nach oben gegen eine Trägereinrichtung (3),
- und entsprechend bei der Verstellung in die Wägeposition
der untere Auslass (7) geöffnet wird durch vertikales Verstellen des Prallmittels (12) nach unten, wodurch ein Auslaufspalt (54) zwischen dem unteren Auslass (77) und dem Prallmittel (12) eingestellt wird, und/oder
- der obere Einlass (6) geöffnet wird durch vertikales Verstellen des Wägebehälters (5) nach unten.

14. Verfahren nach Anspruch 13, **dadurch gekennzeichnet, dass**
die Verstellung des Prallmittels nach oben in einer ersten Teilbewegung einer Stelleinrichtung (25) und nachfolgend die Verstellung des Wägebehälters (5) nach oben in einer zweiten Teilbewegung derselben Stelleinrichtung (25) erfolgen, insbesondere in einer durchgängigen Verstellbewegung.

15. Verfahren nach einem der Ansprüche 12 bis 14, **dadurch gekennzeichnet, dass** der Materialdurchsatz geregelt wird, indem der Auslaufspalt (54) zwischen dem unteren Auslass (7) und dem Prallmittel (12) eingestellt wird.

16. Verfahren nach einem der Ansprüche 12 bis 15, **dadurch gekennzeichnet, dass** der Befüllzyklus (I) und der Wägezyklus (II) selbsttätig eingeleitet werden,
unter Ermittlung der Füllstandshöhe des Schüttguts (20) in dem Wägebehälter (5) und Messung der Messkraft (F) und
unter Ansteuerung des Stellmittels (25) und eines Vakuumventils (23)

17. Verfahren nach einem der Ansprüche 12 bis 16, **dadurch gekennzeichnet, dass**
das Schüttgut (20) kontinuierlich aus dem Wägebehältervolumen (9) nach unten über das Prallmittel (12) in einen Auffangtrichter (10) und aus einem unteren Ausgabeauslass des Auffangtrichters (10) zu dem Förderbereich (60) der Produktionsmaschine gelangt,
wobei in dem Wägezyklus (II) der Auffangtrichter (10) derartig gefüllt wird, dass in dem nachfolgenden Befüllzyklus (I) das Schüttgut (20) kontinuierlich und ohne Unterbrechung von dem Auffangtrichter (10) zu dem Förderbereich (60) ausgegeben wird, bis in dem nachfolgenden Wägezyklus (II) wiederum der Auffangtrichter (10) mit dem Schüttgut (20) gefüllt wird.

18. Verfahren zum Extrudieren eines Extrusionsproduktes, bei dem mit einem Verfahren nach einem der Ansprüche 12 bis 17 kontinuierlich Schüttgut (20), z. B. Kunststoff-Pellets, Kunststoff-Granulat oder Kunststoff-Flocken, in seinem Massedurchsatz gemessen und dem Förderbereich (60) zugeführt wird,
wobei in dem Förderbereich (60) das aufgenommene Schüttgut (20) kontinuierlich zu der Produktionsmaschine, insbesondere einem Extruder, gefördert und dort extrudiert wird,
insbesondere unter Regelung durch Einstellen eines Auslaufspaltes (54).

## Claims

1. Weighing and transporting device (1) for detecting mass flow rates and discharging bulk material (20), comprising:
- a weighing container (5) having an upper inlet (6) for receiving the bulk material (20) and a lower outlet (7) for discharging the bulk material (20),
- at least one weighing cell (4) for measuring the weight of at least the weighing container (5) with bulk material (20) contained therein and for discharging a measuring force signal (F),
- a vacuum conveyor region (14) having a vacuum connection (23) for connecting to a vacuum line (33) and a material suction coupling (24) for connecting a suction intake line for an airstream with bulk material (20) contained therein,
- a filling level sensor (35) for measuring a filling level of the bulk material (20) in the weighing container (5) and outputting a filling level signal (M), **characterised in that**
- at least one actuator (25) for closing the upper inlet (6) and the lower outlet (7),
- a controller means (50), being designed to receive the measuring force signal (F) and the filling level signal (M) and to control said at least one actuator (25) for adjusting between a filling position (II) with closed upper inlet (6) and closed lower outlet (7) of the weighing container (5) and a weighing position with open upper inlet (6) and open lower outlet (7) of the weighing container (5).

2. Weighing and transporting device (1) according to claim 1, **characterised in that**
an impact means (12) is provided below the lower outlet (7) for distributing or mixing the bulk material (20), in particular, an impact cone (12),
the impact means (12) being adjustable by means of the actuator (25) between
its lower position in the weighing position for a weighing cycle (I) in which a discharge gap (54) is formed between the lower outlet (7) and the impact means (12), and
its upper position in the filling position for a filling cycle (II) in which the impact means (12) closes the lower outlet (7), in particular, in an airtight manner.

3. Weighing and transporting device (1) according to claim 2, **characterised in that**
the weighing container (5) is vertically adjustable between its lower weighing position in which it is spaced apart from a support means (3), and its upper filling position in which its upper inlet (6) and/or its upper edge lies in sealing contact with the support means (3),
the common actuator (25) being designed and controllable to adjust
- the impact means (12) against the lower outlet (7) in a first partial motion and
- subsequently the impact means (12) with the weighing container (5) upwards against the support means (3) in a subsequent second partial motion of the actuator (25, 26),
where in the filling position the impact means (12) closes the lower outlet (7) and the support means (3) closes the upper inlet (6) of the weighing container (5) in a sealing manner.

4. Weighing and transporting device (1) according to claim 2 or 3, **characterised in that** the actuator (25), e.g. a pneumatic actuating cylinder (25), is connected to the impact means (12) via a drawbar (26) extending vertically downwards through the weighing container (5), and the impact means (12) is vertically adjustable upwards via the drawbar (26).

5. Weighing and transporting device (1) according to one of the preceding claims, **characterised in that**
it comprises a collecting hopper (10) which is arranged, at least in part, below the lower outlet (7), and which is further designed to receive bulk material (20) falling out of the lower outlet (7) and to forward it to its lower discharging outlet.

6. Weighing and transporting device (1) according to one of the preceding claims, **characterised in that** the controller means (50) is designed and configured, depending upon at least the measuring signal (M) of the filling level sensor (35) and the measuring force signal (F)
- (I) to output control signals for initiating a filling cycle (I) to
= said at least one actuator (25) for closing the lower outlet (7) and the upper inlet (6) of the weighing container (5), thereby creating an enclosed weighing container volume (9) to be filled via the material suction coupling (24),
= and, subsequently, to a vacuum valve (32) for opening a vacuum line (33) provided at the vacuum connection (23),
- (II) and, for initiating a weighing cycle (II), to output control signals (S) to
= said vacuum valve (32) for closing the vacuum line (33),
= and, subsequently, to said at least one actuator (25, 26) for opening the weighing container (5) at its lower outlet (7) and its upper inlet (6).

7. Weighing and transporting device (1) according to one of the preceding claims, **characterised in that** the controller means (50) is further designed and adapted to adjust the discharge gap (54) for controlling the mass throughput, depending upon a mass throughput determined from the measuring force signal (F) and by controlling the actuator (25).

8. Weighing and transporting device (1) according to one of the preceding claims, **characterised in that** the material suction coupling (24) extends through the support means (3) and, at least in part, into the weighing container (5), for direct filling of the weighing container (5) without an upstream storage container.

9. Weighing and transporting device (1) according to one of the preceding claims, **characterised in that** the support means comprises a support plate (3) at which one or more of the following elements are provided: the filling level sensor (35), at least one weighing cell (4), the vacuum connection (23), the material suction coupling (24), the actuator (25), a gasket (8) for sealing the upper inlet (6) of the weighing container (5).

10. Weighing and transporting device (1) according to one of the preceding claims, **characterised in that** the filling level sensor (35) is designed in accordance with one or more of the following embodiments:
- capacitive, in particular, by determining changes in a capacitance depending on the filling level,
- inductive, in particular, by measuring an inductance that changes depending on the filling level,
- as an optical distance meter, e.g., including laser,
- as a radar, in particular, radar distance meter, e.g., as direct or indirect time-of-flight measurement,
- as an ultrasound distance meter.

11. System, made up of a weighing and transporting device (1) according to one of the preceding claims, a vacuum line (33) comprising a vacuum valve (32), a material feeder line (24), being guided in a material container containing the bulk material (20), a transport region (60) below the weighing and transporting device (1), and a production machine.

12. Method for transporting and detecting mass flow rates of bulk material (20), wherein
in alternating filling cycles (I) and weighing cycles (II) bulk material (20) is received in a weighing and transporting device (1) with a weighing container (5), detected, and put out to a transport region (60) of a production machine,
- wherein in the filling cycle (I)
- a vacuum is created in a weighing container volume (9) of the weighing container (5),
- an air stream with bulk material (20) is sucked via a material suction coupling (24) coupled to the weighing container volume (9) so that the bulk material (20) is deposited in the weighing container volume (9),
- a filling level of the bulk materials (20) is measured, and
- upon determination of a maximum filling level, the filling cycle (I) is terminated, and
- wherein in the weighing cycle (II)
- the bulk material (20) moves continuously from the weighing container volume (9) downwards via an impact means (12) to the transport region (60) of the production machine,
- wherein, for adjusting to a filling position and for initiating the filling cycle (I), the lower outlet (7) and the upper inlet (6) of the weighing container (5) are closed and subsequently a vacuum is applied to the vacuum connection (23),
- wherein, for adjusting to a weighing position and for initiating the weighing cycle (II), the application of vacuum to the vacuum connection (23) is terminated and subsequently the lower outlet (7) and the upper inlet (6) of the weighing container (5) are opened.

13. Method according to claim 12, **characterised in that**
- when adjusting into the filling position
- the lower outlet (7) is closed by vertical adjustment of the impact means (12) in an upwards direction against the lower outlet (7), and/or
- the upper inlet (6) is closed by vertical adjustment of the weighing container (5) in an upwards direction against a support means (3),
- and, correspondingly, when adjusting into the weighing position
- the lower outlet (7) is opened by vertical adjustment of the impact means (12) in a downwards direction, thereby setting a discharge gap (54) between the lower outlet (77) and the impact means (12), and/or
- the upper inlet (6) is opened by vertical adjustment of the weighing container (5) in a downwards direction.

14. Method according to claim 13, **characterised in that** the upwards adjustment of the impact means is carried out in a first partial motion of an actuator (25) and, subsequently, the upwards adjustment of the weighing container (5) is carried out in a second partial motion of the same actuator (25), in particular, as a continuous adjusting motion.

15. Method according to one of the claims 12 through 14, **characterised in that** the material throughput is regulated by adjusting the discharge gap (54) between the lower outlet (7) and the impact means (12).

16. Method according to one of the claims 12 through 15, **characterised in that** the filling cycle (I) and the weighing cycle (II) are initiated automatically,
determining the filling level of the bulk material (20) in the weighing container (5) and measuring the measuring force (F) and
controlling the actuator means (25) and a vacuum valve (23)

17. Method according to one of the claims 12 through 16, **characterised in that**
the bulk material (20) is moved continuously from the weighing container volume (9) downwards via the impact means (12) into a collecting hopper (10) and from a lower discharging outlet of the collecting hopper (10) to the transport region (60) of the production machine,
wherein in the weighing cycle (II) the collecting hopper (10) is filled such that in the next following filling cycle (I) the bulk material (20) is discharged from the collecting hopper (10) to the transport region (60) continuously and without interruption until, in the next following weighing cycle (II), the collecting hopper (10) is again filled with the bulk material (20).

18. Method for extruding an extrusion product, in which bulk material (20), e.g. plastic pellets, plastic granulate or plastic flakes, is continuously measured in its mass flow rate and fed to the transport region (60) using a method according to one of the claims 12 through 17,
wherein in the transport region (60) the received bulk material (20) is continuously conveyed towards the production machine, in particular, an extruder, where it is extruded, in particular, with the extrusion being controlled by adjusting a discharge gap (54).

## Revendications

1. Convoyeur de pesage (1) pour détecter un débit de masse et distribuer un matériau en vrac (20), ledit convoyeur présentant :
- un récipient de pesage (5) avec une entrée supérieure (6) pour recevoir le matériau en vrac (20) et une sortie inférieure (7) pour distribuer du matériau en vrac (20),
- au moins un capteur de pesage (4) pour mesurer au moins le poids du récipient de pesage (5) avec le matériau en vrac (20) reçu et émettre un signal de force d'appui (F),
- une zone de transport par aspiration (14) avec un raccord de dépression (23) destiné à être raccordé à une conduite de vide (33) et un raccord d'aspiration de matériau (24) destiné à être raccordé à un conduit d'aspiration pour un courant d'air avec du matériau en vrac (20) reçu,
- un capteur de niveau de remplissage (35) pour mesurer un niveau de remplissage de matériau en vrac (20) dans le récipient de pesage (5) et émettre un signal de niveau de remplissage (M),
**caractérisé par**
- au moins un dispositif de réglage (25) pour fermer l'entrée supérieure (6) et la sortie inférieure (7),
- un dispositif de commande (50) qui est conçu pour recevoir le signal de force d'appui (F) et le signal de niveau de remplissage (M) et pour piloter l'au moins un dispositif de réglage (25) pour le déplacement entre une position de remplissage (II) à entrée supérieure fermée (6) et sortie inférieure fermée (7) du récipient de pesage (5) et une position de pesage à entrée supérieure ouverte (6) et sortie inférieure ouverte (7) du récipient de pesage (5).

2. Convoyeur de pesage (1) suivant la revendication 1, **caractérisé en ce qu'**un moyen de déflection (12), notamment un cône déflecteur (12), est prévu au-dessous de la sortie inférieure (7) pour répartir ou mélanger le matériau en vrac (20), le moyen de déflection (12) étant réglable par déplacement via le dispositif de réglage (25) entre sa position inférieure, à savoir sa position de pesage pour un cycle de pesage (I), dans laquelle une fente d'écoulement (54) est formée entre la sortie inférieure (7) et le moyen de déflection (12), et
sa position supérieure, à savoir sa position de remplissage pour un cycle de remplissage (II), position, dans laquelle le moyen de déflection (12) ferme la sortie inférieure (7), en particulier de manière hermétique.

3. Convoyeur de pesage suivant la revendication 2, **caractérisé en ce que**
le récipient de pesage (5) est déplaçable verticalement entre sa position de pesage inférieure, dans laquelle il est espacé par rapport à un dispositif support, et
sa position de remplissage supérieure, dans laquelle son entrée supérieure (6) et/ou son bord supérieur est adjacent de manière hermétique au dispositif support (3),
le dispositif de réglage commun (25) étant conçu et pouvant être piloté pour le réglage
- du moyen de déflection (12) à l'encontre de la sortie inférieure (7) au cours d'un premier mouvement partiel et
- ensuite, du moyen de déflection (12) avec le récipient de pesage (5) vers le haut, à l'encontre du dispositif support (3) au cours d'un deuxième mouvement partiel du dispositif de réglage (25, 26),
en position de remplissage (12), le moyen de déflection fermant hermétiquement la sortie inférieure (7) et le dispositif support (3) fermant l'entrée supérieure (6) du récipient de pesage (5) de manière hermétique.

4. Convoyeur de pesage (1) suivant la revendication 2 ou 3, **caractérisé en ce que** le dispositif de réglage (25), par exemple un cylindre de réglage pneumatique (25), est relié au moyen de déflection (12) via une barre de traction s'étendant verticalement vers le bas, à travers le récipient de pesage (5), et le moyen de déflection est réglable verticalement vers le haut via la barre de traction (26).

5. Convoyeur de pesage (1) suivant une des revendications précédentes, **caractérisé en ce qu'**il présente une trémie collectrice (10) qui est prévue au moins partiellement au-dessous de la sortie inférieure (7) et qui est en plus conçue pour recevoir du matériau en vrac (20) tombant de la sortie inférieure (7) et transférer celui-ci vers sa sortie de distribution inférieure.

6. Convoyeur de pesage (1) suivant une des revendications précédentes, **caractérisé en ce que** le dispositif de commande (50) est agencé et conçu en fonction au moins du signal de mesure (M) du capteur de niveau de remplissage (35) et du signal de force d'appui (F)
- (I) pour émettre des signaux de commande destinés à initier un cycle de remplissage (I) à
= l'au moins un dispositif de réglage (25) pour fermer la sortie inférieure (7) et l'entrée supérieure (6) du récipient de pesage (5) en formant un volume de récipient de pesage clos (9) pour le remplissage via le raccord d'aspiration de matériau (24),
= et ensuite à une soupape à vide (32) pour ouvrir une conduite de vide (33) prévue sur le raccord de dépression (23),
- (II) et pour émettre des signaux de commande (S) destinés à initier un cycle de pesage (II) à
= la soupape à vide (32) pour fermer la conduite de vide (33),
= et ensuite à l'au moins un dispositif de réglage (25, 26) pour ouvrir le récipient de pesage (5) au niveau de sa sortie inférieure (7) et de son entrée supérieure (6).

7. Convoyeur de pesage (1) suivant une des revendications précédentes, **caractérisé en ce que** le dispositif de commande (50) est en plus agencé et conçu pour ajuster la fente d'écoulement (54) en fonction d'un débit de masse déterminé à partir du signal de force d'appui (F) et piloter le dispositif de réglage (25) pour le réglage du débit de masse.

8. Convoyeur de pesage (1) suivant une des revendications précédentes, **caractérisé en ce que** le raccord d'aspiration de matériau (24) s'étend à travers le dispositif support (3) et au moins partiellement dans le récipient de pesage (5) pour le remplissage direct de celui-ci sans récipient de réception monté en amont.

9. Convoyeur de pesage (1) suivant une des revendications précédentes, **caractérisé en ce que** le dispositif support présente une plaque de support (3), sur laquelle sont prévus un ou plusieurs parmi les éléments suivants : le capteur de niveau de remplissage (35), au moins une cellule de pesage (4), le raccord de dépression (23), le raccord d'aspiration de matériau (24), le dispositif de réglage (25), une garniture d'étanchéité (8) pour étanchéifier l'entrée supérieure (6) du récipient de pesage (5).

10. Convoyeur de pesage (1) suivant une des revendications précédentes, **caractérisé en ce que** le capteur de niveau de remplissage (35) est conçu selon une ou plusieurs des conformations suivantes :
- capacitif, en particulier par détermination de modifications d'une capacité en fonction du niveau de remplissage,
- inductif, en particulier par mesure d'une inductance qui se modifie en fonction du niveau de remplissage,
- comme dispositif optique de mesure de distance, dont par exemple un laser,
- comme radar, en particulier comme dispositif de mesure de distance par radar, par exemple sous la forme d'une mesure de propagation directe ou indirecte,
- comme dispositif de mesure de distance par ultrason.

11. Installation comportant un convoyeur de pesage (1) suivant une des revendications précédentes, une conduite de vide (33) avec une soupape à vide (32), une conduite d'alimentation en matériau (24), qui passe dans un récipient de matériau avec le matériau en vrac (20), une zone de convoyage (60) au-dessous du convoyeur de pesage (1) et une machine de production.

12. Procédé de convoyage et de détection du débit de masse de matériau en vrac (20), dans lequel, au cours de cycles alternés de remplissage (I) et de pesage (II), du matériau en vrac (20) est reçu dans un convoyeur de pesage (1) comportant un récipient de pesage (5), capté et distribué à une zone de transport (60) d'une machine de production,
- procédé, dans lequel, au cours du cycle de remplissage (I)
- une dépression est formée dans un volume de récipient de pesage (9) du récipient de pesage (5),
- un courant d'air avec du matériau en vrac (20) est aspiré via un raccord d'aspiration de matériau (24) raccordé au volume de récipient de pesage (9) de sorte que le matériau en vrac (20) se dépose dans le volume de récipient de pesage (9),
- un niveau de remplissage de matériau en vrac (20) est mesuré, et
- lorsqu'un niveau de remplissage maximal est déterminé, le cycle de remplissage (I) est arrêté, et
- au cours du cycle de pesage (II)
- le matériau en vrac (20) descend continuellement depuis le volume de récipient de pesage (9) vers le bas, via un moyen de déflection (12), vers la zone de transport (60) de la machine de production,
- pour le réglage dans une position de remplissage et pour initier le cycle de remplissage (I), la sortie inférieure (7) et l'entrée supérieure (6) du récipient de pesage (5) sont fermées, et ensuite un vide est appliqué au raccord de dépression (23),
- pour le réglage dans une position de pesage et l'initiation du cycle de pesage (II) l'alimentation en vide du raccord de dépression (23) est arrêtée, et ensuite la sortie inférieure (7) et l'entrée supérieure (6) du récipient de pesage (5) sont ouvertes.

13. Procédé suivant la revendication 12, **caractérisé en ce que**
- lors du réglage en position de remplissage
- la sortie inférieure (7) est fermée par un déplacement vertical du moyen de déflection (12) vers le haut à l'encontre de la sortie inférieure (7), et/ou
- l'entrée supérieure (6) est fermée par un déplacement vertical du récipient de pesage (5) vers le haut à l'encontre du dispositif support (3),
- et par conséquent lors du déplacement en position de pesage
- la sortie inférieure (7) est ouverte par un déplacement vertical du moyen de déflection (12) vers le bas, ce qui ajuste une fente d'écoulement (54) entre la sortie inférieure (77) et le moyen de déflection (12), et/ou
- l'entrée supérieure (6) est ouverte par un déplacement vertical du récipient de pesage (5) vers le bas.

14. Procédé suivant la revendication 13, **caractérisé en ce que** le déplacement du moyen de déflection vers le haut au cours d'un premier mouvement partiel d'un dispositif de réglage (25), et ensuite le déplacement du récipient de pesage (5) vers le haut au cours d'un deuxième mouvement partiel du même dispositif de réglage (25) ont lieu en particulier au cours d'un mouvement continu.

15. Procédé suivant une des revendications 12 à 14, **caractérisé en ce que** le débit de matériau est réglé en ajustant la fente d'écoulement (54) entre la sortie inférieure (7) et le moyen de déflection (12).

16. Procédé suivant une des revendications 12 à 15, **caractérisé en ce que**
le cycle de remplissage (I) et le cycle de pesage (II) sont initiés automatiquement en déterminant le niveau de remplissage de matériau en vrac (20) dans le récipient de pesage (5) et en mesurant la force d'appui (F) et pilotant le dispositif de réglage (25) et une soupape à vide (23).

17. Procédé suivant une des revendications 12 à 16, **caractérisé en ce que**
le matériau en vrac (20) passe continuellement hors du volume de récipient de pesage (9) via le moyen de déflection (12) vers le bas, dans une trémie collectrice (10) et depuis une sortie inférieure de distribution de la trémie collectrice (10) à la zone de transport (60) de la machine de production,
la trémie collectrice (10) étant, au cours du cycle de pesage (II) remplie autant qu'au cours du cycle de remplissage suivant (I), le matériau en vrac (20) est distribué continuellement et sans interruption depuis la trémie collectrice (10) à la zone de transport (60) jusqu'à ce que la trémie collectrice (10) soit à nouveau remplie de matériau en vrac (20) au cours du cycle de pesage suivant (II).

18. Procédé destiné à extruder un produit d'extrusion, dans lequel un procédé suivant une des revendications 12 à 17 permet de mesurer continuellement le débit de masse d'un matériau en vrac (20), par exemple des pellets plastiques, des granulés plastiques ou des flocons plastiques, et d'amener du matériau en vrac (20) à la zone de transport (60),
le matériau en vrac (20) reçu dans la zone de transport (60) étant transporté continuellement à la machine de production, notamment à une extrudeuse, où il est extrudé, en particulier en ajustant la fente d'écoulement (54).
